# EUROPÄISCHE PATENTSCHRIFT

(11) **EP 3 746 833 B1**
(45) Veröffentlichungstag und Bekanntmachung des Hinweises auf die Patenterteilung: **27.09.2023**
(21) Anmeldenummer: 19702047.2
(22) Anmeldetag: 24.01.2019
(51) Int. Cl.: G02B 26/08, G02B 26/00

(54) **MIKROMECHANISCHE SPIEGELVORRICHTUNG, SPIEGELSYSTEM UND VERFAHREN ZUM HERSTELLEN EINER MIKROMECHANISCHEN SPIEGELVORRICHTUNG**
MICROMECHANICAL MIRROR DEVICE, MIRROR SYSTEM, AND METHOD FOR PRODUCING A MICROMECHANICAL MIRROR DEVICE
DISPOSITIF MIROIR MICROMÉCANIQUE, SYSTÈME DE MIROIRS ET PROCÉDÉ DE FABRICATION D'UN DISPOSITIF MIROIR MICROMÉCANIQUE

(30) Priorität: 01.02.2018 DE 102018201512; 08.02.2018 DE 102018201965
(43) Veröffentlichungstag der Anmeldung: 09.12.2020
(73) Patentinhaber: Robert Bosch GmbH, 70442 Stuttgart (DE)
(72) Erfinder: HUBER, Christian, 71638 Ludwigsburg (DE); SCHMID, Marc, 70565 Stuttgart (DE); ROEDEL, Reinhold, 72760 Reutlingen (DE); SCHELLING, Christoph, 70619 Stuttgart (DE); KRAEMMER, Christoph Daniel, 76137 Karlsruhe (DE)
(86) Internationale Anmeldenummer: PCT/EP2019/051690
(87) Internationale Veröffentlichungsnummer: WO 2019/149605

(56) Entgegenhaltungen:
- US-A- 5 825 528
- US-A1- 2004 136 076
- US-A1- 2008 094 690
- US-A1- 2012 281 270

## Beschreibung

Die vorliegende Erfindung betrifft eine mikromechanische Spiegelvorrichtung, ein Spiegelsystem und ein Verfahren zum Herstellen einer mikromechanischen Spiegelvorrichtung. Des Weiteren wird ein Interferometer nach dem Fabry-Perot-Prinzip bereitgestellt, welches die erfindungsgemäße Spiegelvorrichtung und/oder das erfindungsgemäße Spiegelsystem verwendet.

### Stand der Technik

Durchstimmbare spektrale Filter mit der Möglichkeit der Miniaturisierung lassen sich mittels MEMS-Technologie, beispielsweise als Fabry-Perot-Interferometer (FPI) realisieren. Dabei wird ausgenutzt, dass eine Kavität, bestehend aus zwei planparallelen, hochreflektierenden Spiegelvorrichtungen mit einem Abstand (Kavitätslänge) im Bereich optischer Wellenlängen eine starke Transmission nur für Wellenlängen zeigt, bei denen die Kavitätslänge einem ganzzahligen Vielfachen der halben Wellenlänge entspricht. Die Kavitätslänge lässt sich beispielsweise mittels elektrostatischer oder piezoelektrischer Aktuierung verändern, wodurch ein spektral durchstimmbares Filterelement entsteht. Ein wichtiger Einflussfaktor auf eine Performance eines solchen Spektrometers ist die Parallelität der beiden Spiegelvorrichtungen, welche möglichst hoch sein sollte, damit zwischen den beiden Spiegelvorrichtungen eine definierte Kavität mit einer möglichst hohen Finesse entsteht.

Um ein Fabry-Perot-Interferometer zu realisieren, das einen möglichst großen Wellenlängenbereich adressieren kann, müssen mehrere Bedingungen erfüllt sein. Ein grundlegendes Kriterium ist, dass die beiden Spiegelelemente des Neue Beschreibungsseiten (Reinschrift)

Interferometers über den gesamten zu messenden Wellenlängenbereich hochreflektiv sind. Eine oft genutzte Ausführung von Spiegelvorrichtungen in miniaturisierten Interferometern sind dielektrische Schichtsysteme aus alternierenden Schichten von hoch- und niedrigbrechenden Materialien, insbesondere Bragg-Reflektoren (Englisch "distributed bragg reflectors", DBR), bei denen eine optische Dicke dieser Schichten idealerweise jeweils ein Viertel der Zentralwellenlänge des zu adressierenden Bereichs ist.

Eine maximale Reflektivität der Spiegelschichten wird durch einen möglichst hohen Brechungsindexsprung der DBR-Spiegelschichten erreicht. Sehr hohe Brechungsindexsprünge lassen sich beispielsweise mit Silizium-Luft-Multilagenspiegelstapeln erreichen. Um dabei eine gegenseitige (Co-)Planarität von Spiegelschichten innerhalb einer Spiegelvorrichtung zu gewährleisten, sind Stützstrukturen hilfreich, die den Abstand der umgebenden hochbrechenden Schichten, welche hierin als Spiegelelemente bezeichnet werden, konstant halten.

In der US 2014/0111811 A1 ist ein durchstimmbares Fabry-Perot-Interferometer gezeigt, welches Ankerstrukturen umfasst, welche zwei Spiegelvorrichtungen, d.h. spiegelnde Elemente, voneinander beabstanden. Über die Dichte der Stützelemente kann eine Steifheit der Spiegelvorrichtungen eingestellt werden. Beide Spiegelvorrichtungen sind mit ein und demselben Substrat verbunden. Bisher wurden Teile der hochbrechenden Schicht, das heißt der Spiegelelemente, oder Zwischenschichten als Stützstrukturen genutzt.

Außerdem offenbaren die US 2012/0281270 A1, die US 5,825,528 A, die US 2008/0094690 A1 und die US 2004/0136076 A1 jeweils eine mikromechanische Spiegelvorrichtung mit einem ersten Spiegelelement, einem im Wesentlichen planparallel zu dem ersten Spiegelelement angeordneten zweiten Spiegelelement und mindestens einer Stützstruktur, welche sich in einer axialen Richtung senkrecht zu dem ersten Spiegelelement und dem zweiten Spiegelelement erstreckt und mittels welcher das erste Spiegelelement und das zweite Spiegelelement lokal voneinander beabstandet angeordnet sind.

### Offenbarung der Erfindung

Die vorliegende Erfindung offenbart eine Spiegelvorrichtung mit den Merkmalen des Patentanspruchs 1, ein Spiegelsystem mit den Merkmalen des Patentanspruchs 8 sowie ein Verfahren gemäß Patentanspruch 9.

Unter einer Spiegelvorrichtung ist insbesondere eine Vorrichtung zu verstehen, welche in einem Fabry-Perot-Interferometer einen Lichtstrahl reflektiert.

Die Opferschicht ist ebenfalls als dielektrische Schicht bezeichenbar und kann beispielsweise aus Siliziumdioxid bestehen.

Besonders bevorzugt entspricht ein Abstand zwischen dem ersten und dem zweiten Spiegelelement einem Viertel einer Zentralwellenlänge, für welche die Spiegelvorrichtung als optischer Filter dienen soll.

### Vorteile der Erfindung

Die mindestens eine Stützstruktur weist mindestens einen Abschnitt auf, welcher aus einer Außenfläche des ersten und/oder des zweiten Spiegelelements hervorsteht. Dieser Abschnitt fungiert somit als ein Anschlag oder auch als eine Anti-Haftreibung-Erhebung (Englisch "anti-stiction bump", kurz für "anti-static-friction bump"). Besonders vorteilhaft ist es, wenn die mindestens eine Stützstruktur mehrere solche Anschläge aufweist oder wenn mehrere Stützstrukturen vorgesehen sind, welche jeweils über mindestens einen derartigen Anschlag verfügen.

Solche Anschläge können ein Zusammenkleben von Spiegelvorrichtungen oder ein Festkleben von Spiegelvorrichtungen auf einem Substrat verhindern oder eine Wahrscheinlichkeit dafür verringern. Außerdem ist zumindest der jeweilige Abschnitt der mindestens einen Stützstruktur, welche als Anschlag fungiert, aus einem elektrisch isolierenden Material (Isolator) ausgebildet. Damit kann ein Verschweißen von Elektroden mit den Spiegelelementen beim Gebrauch der Spiegelvorrichtung zum Beispiel innerhalb eines Interferometers verhindert werden.

Unter der Außenfläche eines Spiegelelements ist eine Fläche des jeweiligen Spiegelelements zu verstehen, welche von dem Zwischenraum zwischen dem ersten und dem zweiten Spiegelelement abgewandt ist. Die Außenfläche zumindest eines Spiegelelements stellt auch die Fläche dar, auf welche Licht auftrifft, das durch die Spiegelvorrichtung gespiegelt werden soll.

Die mindestens eine Stützstruktur kann aus einem oder mehreren separaten Stützelementen bestehen, oder ein oder mehrere separate Stützelemente aufweisen. Dadurch, dass die mindestens eine Stützstruktur in der axialen Richtung sowohl das erste als auch das zweite Spiegelelement überlappt, wird eine mechanisch besonders gute Verbindung realisiert, wobei die mindestens eine Stützstruktur gleichzeitig eine Verformung der Spiegelelemente unter Belastung verringert.

Bevorzugt sind das erste und das zweite Spiegelelement aus demselben Material ausgebildet, während die mindestens eine Stützstruktur ausschließlich aus Materialien bzw. aus genau einem Material ausgebildet ist, welche bzw. welches sich von dem Material unterscheidet bzw. unterscheiden, aus welchem die Spiegelelemente ausgebildet sind.

Die Verwendung verschiedener Materialien für die mindestens eine Stützstruktur einerseits und die Spiegelelemente andererseits ermöglicht eine separate Optimierung der elektrischen und mechanischen Eigenschaften der Stützstruktur einerseits und der optischen Eigenschaften der Spiegelelemente andererseits. Besonders bevorzugt ist es, wenn die mindestens eine Stützstruktur aus einem oder mehreren elektrisch isolierenden Materialien ausgebildet ist, während das erste und/oder das zweite Spiegelelement aus einem elektrisch leitenden oder einem halbleitenden Material ausgebildet ist bzw. sind, so dass die Teilabschnitte der Spiegelelemente als separate Elektroden fungieren können. Darüber hinaus kann das Material der Stützstruktur eine andere Dicke und/oder eine andere mechanische Verspannung aufweisen als das Material der Spiegelelemente, womit sich die Robustheit der gesamten Spiegelvorrichtung erhöhen lässt.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung weist das Material der Stützstruktur eine andere Dicke und/oder mechanische Verspannung auf als ein Material des ersten Spiegelelements und/oder des zweiten Spiegelelements. Auf diese Weise kann die beispielsweise die Steifigkeit und damit die Robustheit der gesamten Spiegelvorrichtung positiv beeinflusst werden.

Gemäß einer vorteilhaften Weiterbildung unterteilt die mindestens eine Stützstruktur das erste Spiegelelement und das zweite Spiegelelement in je mindestens zwei Teilabschnitte, welche durch die mindestens eine Stützstruktur voneinander elektrisch isoliert sind.

Durch das elektrische Trennen der mindestens zwei Teilabschnitte des ersten und des zweiten Spiegelelements wird eine Vielzahl von Anwendungs- und Gestaltungsmöglichkeiten für die mikromechanische Spiegelvorrichtung eröffnet. Beispielsweise können die verschiedenen, voneinander elektrisch isolierten Teilabschnitte als separate Elektroden verwendet werden, welche auf verschiedene elektrische Potentiale gelegt werden können und/oder mit verschiedenen Strömen und Spannungen beaufschlagt werden können.

Beispielsweise kann ein Teilabschnitt mit einer Spannung beaufschlagt werden, welche zum Aktuieren der Spiegelvorrichtung, das heißt beispielsweise zum Ausrichten der Spiegelvorrichtung, eingesetzt werden kann. Hierdurch kann der Abstand zwischen der aktuierten Spiegelvorrichtung zu beispielsweise einer weiteren Spiegelvorrichtung innerhalb ein und desselben Interferometers verändert werden, wodurch das Interferometer spektral durchstimmbar ist.

Ein weiterer Teilabschnitt des ersten und des zweiten Spiegelelements kann beispielsweise mit einer Spannung beaufschlagt werden, welche zum Detektieren der Auslenkung der Spiegelvorrichtung verwendet wird. In einem weiteren Teilabschnitt kann ein feldfreier Raum oder ein weitgehend feldfreier Raum erzielt werden, beispielsweise um Verformungen der Spiegelvorrichtung in dem feldfreien Raum zu vermeiden.

Gemäß einer weiteren bevorzugten Weiterbildung überlappt eine laterale Ausdehnung der mindestens einen Stützstruktur mit einer lateralen Ausdehnung des ersten und/oder des zweiten Spiegelelements. Auf diese Weise kann eine bessere mechanische Anbindung zwischen der mindestens einen Stützstruktur und dem ersten und/oder dem zweiten Spiegelelement erzielt werden. Unter einer lateralen, oder transversalen, Ausdehnung ist insbesondere eine Ausdehnung in einer Richtung zu verstehen, welche in einer Ebene liegt, welche parallel zu dem ersten und dem zweiten Spiegelelement gedacht werden kann. Somit ist die Richtung senkrecht zu einer axialen Richtung angeordnet, welche wiederum senkrecht zu den Spiegelelementen angeordnet ist.

Gemäß einer weiteren bevorzugten Weiterbildung ist die mindestens eine Stützstruktur aus mindestens zwei verschiedenen Materialien ausgebildet. Beispielsweise kann ein erstes Material der mindestens einen Stützstruktur mit den Spiegelelementen in Kontakt stehen, während ein zweites Material der Stützstruktur als ein stabilisierender Kern der Stützstruktur ausgebildet und angeordnet ist, um eine Steifigkeit der Stützstruktur zu erhöhen und somit einem Abstand zwischen dem ersten und dem zweiten Spiegelelement zur Verbesserung der optischen Eigenschaften der Spiegelvorrichtung konstant zu halten.

Gemäß einer weiteren bevorzugten Weiterbildung weist die mindestens eine Stützstruktur einen Fluiddurchgangskanal auf, durch welche hindurch ein Fluid die Stützstruktur das erste und das zweite Spiegelelement durchqueren kann. Auf diese Weise kann ein thermischer und/oder atmosphärischer Ausgleich zwischen zwei verschiedenen Seiten der Spiegelvorrichtung verbessert werden, wodurch sich externe Zug-, Druck- und Verformungskräfte auf die Spiegelvorrichtung verringern können.

Gemäß einer weiteren bevorzugten Weiterbildung ist in dem Zwischenraum zwischen dem ersten und dem zweiten Spiegelelement ein Gas oder ein Vakuum angeordnet. Bevorzugt ist in dem Zwischenraum ein Material mit einem niedrigen Brechungsindex angeordnet, welcher besonders bevorzugt nahe bei Eins liegt, wie es beispielsweise bei Luft (also ein Gas oder Gasgemisch) und bei Vakuum der Fall ist. Ein hoher Brechungsindexkontrast zwischen einem Brechungsindex des Zwischenraums zwischen den Spiegelelementen einerseits und einem Brechungsindex des ersten und/oder des zweiten Spiegelelements andererseits vergrößert den Wellenlängenbereich, in welchem die Spiegelvorrichtung eine hohe Reflexion aufweist und erhöht die maximal erreichbare Reflexion bei konstanter Anzahl an Schichten im Spiegel. Ein Spiegelsystem, insbesondere ein Interferometer, mit einer derart ausgebildeten Spiegelvorrichtung ist somit noch vielseitiger einsetzbar.

Gemäß einer bevorzugten Weiterbildung ist das Spiegelsystem ein Interferometer, insbesondere ein Fabry-Perot-Interferometer, wobei mindestens eine der Spiegelvorrichtungen des Interferometers eine erfindungsgemäße Spiegelvorrichtung ist.

Gemäß einer vorteilhaften Weiterbildung des erfindungsgemäßen Verfahrens erfolgt das Entfernen jeweils eines Teils der ersten lichtbrechenden Schicht, der Opferschicht und der zweiten lichtbrechenden Schicht, derart, dass die zusammenhängende Ausnehmung derart entsteht, dass die Ausnehmung die erste und die zweite lichtbrechende Schicht (also die späteren Spiegelelemente) in je mindestens zwei voneinander beabstandete Teilabschnitte unterteilt. Dies hat die im Voranstehenden im Zusammenhang mit einem elektrischen Isolieren der Teilabschnitte beschriebenen Vorteile.

Gemäß einer bevorzugten Weiterbildung des erfindungsgemäßen Verfahrens wird der Schichtstapel mit einer an der zweiten lichtbrechenden Schicht angeordneten Schutzschicht bereitgestellt, welche die ursprüngliche Außenschicht des Schichtstapels an einer Seite des Schichtstapels bildet. Hierbei wird auch ein Teil der Schutzschicht zum Ausbilden der Ausnehmung entfernt. Die Schutzschicht kann bei dem Entfernen des Teils der Füllschicht als Ätzstopp und/oder als Polierstopp fungieren, das heißt, gegenüber einem eingesetzten Ätzverfahren und/oder einer eingesetzten Poliervorrichtung resistenter sein als die Füllschicht. Die Schutzschicht kann nach dem Entfernen des Teils der Füllschicht entfernt werden.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: eine schematische Querschnittsdarstellung einer mikromechanischen Spiegelvorrichtung, welche nicht unter die Erfindung fällt;
- Fig. 2: eine schematische Querschnittsdarstellung einer mikromechanischen Spiegelvorrichtung gemäß einer weiteren Ausführungsform in einer Detailansicht;
- Fig. 3: eine schematische Querschnittsdarstellung einer mikromechanischen Spiegelvorrichtung gemäß noch einer weiteren Ausführungsform in einer Detailansicht;
- Fig. 4: eine schematische Querschnittsdarstellung einer mikromechanischen Spiegelvorrichtung gemäß noch einer weiteren Ausführungsform in einer Detailansicht;
- Fig. 5: eine schematische Querschnittsdarstellung einer mikromechanischen Spiegelvorrichtung gemäß noch einer weiteren Ausführungsform in einer Detailansicht;
- Fig. 6: eine schematische Querschnittsdarstellung einer mikromechanischen Spiegelvorrichtung gemäß noch einer weiteren Ausführungsform in einer Detailansicht;
- Fig. 7: eine schematische Draufsicht auf einen Ausschnitt aus einer mikromechanischen Spiegelvorrichtung gemäß einer der Figuren 1 bis 6;
- Fig. 8: ein schematisches Blockdiagramm zum Erläutern eines Spiegelsystems gemäß einer weiteren Ausführungsform;
- Fig. 9: ein schematisches Flussdiagramm zum Erläutern eines Verfahrens zum Herstellen einer mikromechanischen Spiegelvorrichtung; und
- Fig. 10 bis 15: schematische Detailansichten im Querschnitt durch Zwischenprodukte des erfindungsgemäßen Verfahrens zum Herstellen der mikromechanischen Spiegelvorrichtung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

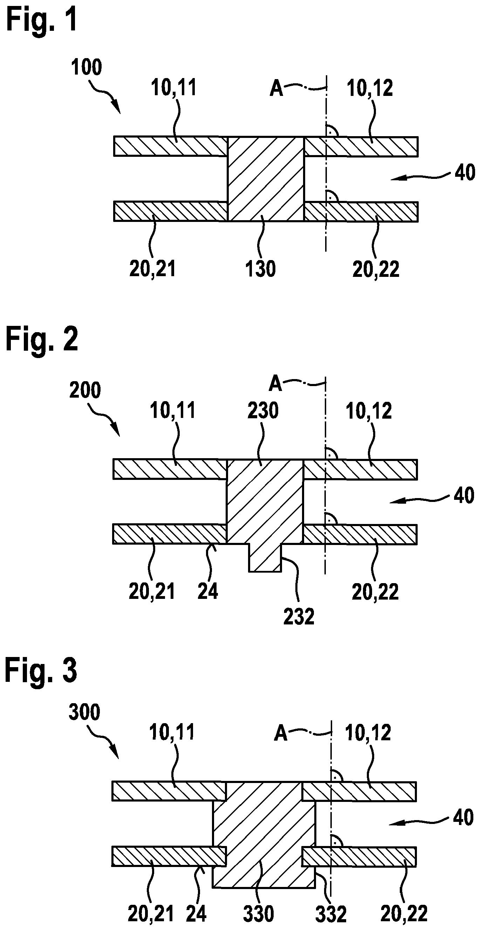

Fig. 1 zeigt eine schematische Querschnittsdarstellung einer mikromechanischen Spiegelvorrichtung 100, welche nicht unter die Erfindung fällt. Die Spiegelvorrichtung 100 weist ein erstes, plan ausgebildetes Spiegelelement 10 sowie ein zweites, plan ausgebildetes Spiegelelement 20 auf, welche zueinander im Wesentlichen, oder vollständig, planparallel angeordnet sind. Ein Zwischenraum 40 zwischen dem ersten und dem zweiten Spiegelelement 10, 20 weist einen geringeren Brechungsindex auf als das erste Spiegelelement 10 und/oder als das zweite Spiegelelement 20 selbst. Auf diese Weise fungiert die Spiegelvorrichtung 100 als ein mikromechanischer Bragg-Spiegel.

Die Spiegelvorrichtung 100 kann beispielsweise derart ausgebildet sein, dass der Zwischenraum 40 zur Atmosphäre offen ist und somit im Betrieb mit Luft gefüllt ist, welche einen nahe bei 1 liegenden Brechungsindex aufweist. Alternativ kann die Spiegelvorrichtung 100 auch derart ausgebildet sein, dass der Zwischenraum 40 gasdicht abgeschlossen ist. In diesem Fall kann der Zwischenraum 40 mit einem Gas oder einem Gasgemisch, z.B. Luft, befüllt sein. Alternativ kann in dem Zwischenraum 40 auch ein Vakuum ausgebildet sein, dessen Brechungsindex ebenfalls nahe bei 1 liegt.

Die Spiegelelemente 10, 20 weisen, relativ zu einem Brechungsindex des Zwischenraums 40, einen höheren Brechungsindex auf. Vorteilhaft können sowohl das erste als auch das zweite Spiegelelement 10, 20 aus demselben, hochbrechenden Material ausgebildet sein. Als ein hochbrechendes Material ist beispielsweise ein Material zu verstehen, dessen Brechungsindex größer als 3 ist. Die Spiegelelemente 10, 20 können beispielsweise aus Silizium ausgebildet sein, welches einen Brechungsindex von ungefähr 3,5 aufweist, oder Silizium aufweisen. Es sind jedoch auch andere Materialien wie beispielsweise Germanium oder Siliziumcarbid als Materialien für das erste und/oder das zweite Spiegelelement 10, 20 denkbar.

Die mikromechanische Spiegelvorrichtung 100 weist weiterhin eine Stützstruktur 130 auf, durch welche das erste und das zweite Spiegelelement 10, 20 zumindest lokal voneinander beabstandet sind. Mit anderen Worten ist die mindestens eine Stützstruktur 130 dazu angeordnet, an ihrer Position einen definierten und gewünschten Abstand zwischen dem ersten Spiegelelement 10 und dem zweiten Spiegelelement 20 zu sichern.

Die mindestens eine Stützstruktur 130 ist optional derart ausgebildet, dass durch sie das erste Spiegelelement 10 in einen ersten Teilabschnitt 11 und einen zweiten Teilabschnitt 12 unterteilt wird, und weiterhin derart, dass durch die mindestens eine Stützstruktur 130 das zweite Spiegelelement 20 in einen ersten Teilabschnitt 21 und einen zweiten Teilabschnitt 22 unterteilt wird. Die mindestens eine Stützstruktur 130 ist optional weiterhin derart ausgebildet, dass der erste und der zweite Teilabschnitt 11, 12 des ersten Spiegelelements 10 voneinander elektrisch isoliert sind und dass der erste Teilabschnitt 21 und der zweite Teilabschnitt 22 des zweiten Spiegelelements 20 voneinander elektrisch isoliert sind.

Beispielsweise kann die mindestens eine Stützstruktur 130 vollständig aus einem elektrisch isolierenden Material ausgebildet sein, beispielsweise Silizium-reiches Nitrid, Siliziumcarbid (SiC), Siliziumcarbonitrid (SiCN) und dergleichen mehr.

Im Folgenden wird die Spiegelvorrichtung 100 gemäß der Annahme beschrieben, dass die Teilabschnitte 11, 12, 21, 22 der Spiegelelemente 10, 20 voneinander durch die mindestens eine Stützstruktur 130 elektrisch isoliert sind. Es versteht sich jedoch, dass die mindestens eine Stützstruktur 130, oder mindestens eine von mehreren Stützstrukturen 130, auch elektrisch leitend oder halbleitend ausgebildet sein kann, sodass keine, oder nur eine teilweise, elektrische Isolierung der Teilabschnitte 11, 12, 21, 22 vorliegt.

Elektrisch voneinander isolierte Teilabschnitte der Spiegelelemente ermöglichen beispielsweise eine direkte kapazitive Detektion des Abstandes der Spiegelvorrichtung von einem Referenzobjekt oder ein Segmentieren von Elektroden auf der Spiegelvorrichtung selbst.

Dabei kann vorgesehen sein, dass der erste Teilabschnitt 11 des ersten Spiegelelements 10 und der erste Teilabschnitt 21 des zweiten Spiegelelements 20 miteinander elektrisch in Verbindung stehen, beispielsweise an einem nicht gezeigten Rand der Spiegelvorrichtung 100. Zusätzlich oder alternativ kann vorgesehen sein, dass der zweite Teilabschnitt 12 des ersten Spiegelelements 10 und der zweite Teilabschnitt 22 des zweiten Spiegelelements 20 miteinander elektrisch in Verbindung stehen, beispielsweise an einem nicht gezeigten Rand der Spiegelvorrichtung 100.

Die mindestens eine Stützstruktur 130 überlappt in einer axialen Richtung A, welche senkrecht zu dem ersten und dem Spiegelelement 10, 20 angeordnet ist, sowohl das erste Spiegelelement 10 als auch das zweite Spiegelelement 20. Mit anderen Worten durchquert die mindestens eine Stützstruktur 130 sowohl das erste Spiegelelement 10 als auch das zweite Spiegelelement 20. Wieder anders ausgedrückt erstreckt sich die mindestens eine Stützstruktur zumindest von einer Außenseite des ersten Spiegelelements 10, welche von dem zweiten Spiegelelement 20 abgewandt ist, zumindest bis hin zu einer Außenseite des zweiten Spiegelelements 20, welche von dem ersten Spiegelelement 10 abgewandt ist. Die axiale Richtung A ist so bezeichnet, da sie als eine optische Achse für die Spiegelvorrichtung verwendet werden kann.

Die mindestens eine Stützstruktur 130 in der Spiegelvorrichtung 100 in Fig. 1 ist lateral durchgängig ausgebildet, das heißt, sie weist insbesondere keine Hohlräume zwischen dem ersten Teilabschnitt 11 und dem zweiten Teilabschnitt 12 des ersten Spiegelelements 10 und keine Hohlräume zwischen dem ersten Teilabschnitt 21 und dem zweiten Teilabschnitt 22 des zweiten Spiegelelements 20 auf. Somit ist die Stützstruktur 130 besonders steif ausgebildet, wodurch sich Verformungen der Spiegelelemente 10, 20 verhindern oder verringern lassen.

Weiterhin ist die mindestens eine Stützstruktur 130 in Fig. 1 auch axial durchgängig ausgebildet. Die Stützstruktur 130 ist sowohl an einer Außenfläche des ersten Spiegelelements 10 als auch an einer Außenfläche des zweiten Spiegelelements 20 jeweils oberflächengleich mit dem jeweiligen Spiegelelement 10, 20 ausgebildet, wobei auch Abweichungen hiervon möglich sind.

Fig. 2 zeigt eine schematische Querschnittsdarstellung einer mikromechanischen Spiegelvorrichtung 200 gemäß einer weiteren Ausführungsform in einer Detailansicht. Die Spiegelvorrichtung 200 stellt eine Variante der Spiegelvorrichtung 100 dar. Die Spiegelvorrichtung 200 ist ebenso ausgebildet wie im Voranstehenden in Bezug auf die Spiegelvorrichtung 100 beschrieben, mit dem Unterschied, dass mindestens eine Stützstruktur 230 der Spiegelvorrichtung 200 an einer Außenfläche 24 des zweiten Spiegelelements 20 einen Abschnitt 232 aufweist, welcher aus der Außenfläche 24 hervorsteht.

Dieser Abschnitt 232 ist auch als ein Anschlag oder auch als eine Anti-Haftreibung-Erhebung (Englisch "anti-stiction bump", kurz für "anti-static-friction bump") bezeichenbar und hat die im Voranstehenden beschriebenen Vorteile.

Fig. 3 zeigt eine schematische Querschnittsdarstellung einer mikromechanischen Spiegelvorrichtung 300 gemäß noch einer weiteren Ausführungsform in einer Detailansicht. Auch bei der Spiegelvorrichtung 300 handelt es sich um eine Variante der Spiegelvorrichtung 100. Die Spiegelvorrichtung 300 unterscheidet sich von der Spiegelvorrichtung 100 wiederum in der Gestaltung einer mindestens einen Stützstruktur 330 der Spiegelvorrichtung 300 anstelle der mindestens einen Stützstruktur 130 der Spiegelvorrichtung 100.

Die mindestens eine Stützstruktur 330 ist derart ausgebildet, dass sie sowohl das erste Spiegelelement 10 als auch das zweite Spiegelelement 20 lateral bzw. transversal überlappt, um eine bessere mechanische Anbindung zu gewährleisten. Unabhängig davon, und optional, ist die mindestens eine Stützstruktur 330 zusätzlich derart ausgebildet, dass sie einen Abschnitt 332 aufweist, welcher aus der zweiten Außenfläche 24 des zweiten Spiegelelements 20 hervorsteht und somit nicht nur besonders gut das zweite Spiegelelement 20 umgreift, sondern gleichzeitig mit dem Abschnitt 332 auch wiederum einen Anschlag bzw. eine Anti-Haftreibung-Erhebung bereitstellt.

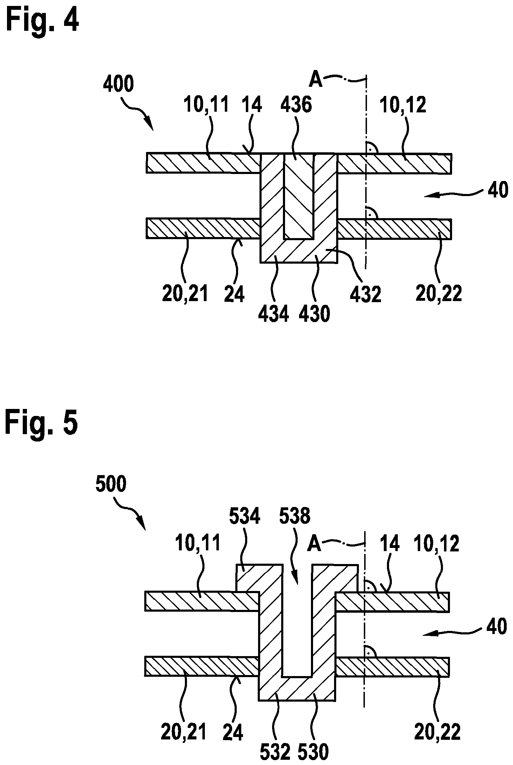

Fig. 4 zeigt eine schematische Querschnittsdarstellung einer mikromechanischen Spiegelvorrichtung 400 gemäß noch einer weiteren Ausführungsform in einer Detailansicht. Auch die Spiegelvorrichtung 400 ist eine Variante der Spiegelvorrichtung 100 unterscheidet sich von der Spiegelvorrichtung 100 in der Ausgestaltung einer Stützstruktur 430, welche bei der Spiegelvorrichtung 400 anstelle der Stützstruktur 130 der Spiegelvorrichtung 100 tritt.

Die Stützstruktur 430 ist aus zwei verschiedenen Materialien ausgebildet, wobei mindestens eines der beiden Materialien ein elektrisch isolierendes Material ist. Das elektrisch isolierende Material 434 steht mit dem ersten und dem zweiten Spiegelelement 10, 20 in direktem Kontakt, während das zweite Material lediglich mit dem ersten Material 434 in direktem Kontakt steht und, außer an einer Außenfläche 14 des ersten Spiegelelements 10, vollständig von dem ersten Material 434 umgeben ist. Das zweite Material 436 kann somit als ein Kern der Stützstruktur 430 bezeichnet werden und kann beispielsweise steifer ausgebildet sein als das erste Material 434, um der Stützstruktur 430 insgesamt größere Steifigkeit zu verleihen.

Das zweite Material 436 kann elektrisch isolierend ausgebildet sein, muss aber nicht elektrisch isolierend ausgebildet sein. Somit sind die elektrischen Eigenschaften der Stützstruktur 430 einerseits, welche auf das erste Material 434 zurückgehen, und die mechanisch stabilisierenden Eigenschaften der Stützstruktur 430 andererseits, welche auf die Kombination des ersten Materials 434 mit dem zweiten Material 436 zurückgehen, weitgehend separat voneinander optimierbar.

Auch bei der mindestens einen Stützstruktur 430 kann ein Abschnitt 432 vorgesehen sein, welcher aus der Außenfläche 24 des zweiten Spiegelelements 20 hervorsteht oder herausragt und welcher beispielsweise als eine Art Anschlag oder Anti-Haftreibungs-Erhebung verwendbar ist.

Fig. 5 zeigt eine schematische Querschnittsdarstellung einer mikromechanischen Spiegelvorrichtung 500 gemäß noch einer weiteren Ausführungsform in einer Detailansicht. Die Spiegelvorrichtung 500 ist als eine Variante der Spiegelvorrichtung 100 bezeichenbar, wobei sich die Spiegelvorrichtung 500 durch eine Stützstruktur 530, welche anstelle der Stützstruktur 130 tritt, von der Spiegelvorrichtung 100 unterscheidet.

Die mindestens eine Stützstruktur 530 weist eine Blindbohrung oder eine Ausnehmung 538 auf, welche sich zu einer Außenseite der Spiegelvorrichtung 500 öffnet, beispielsweise an der Außenfläche 14 des ersten Spiegelelements 10. Vorteilhaft weist die mindestens eine Stützstruktur 530 einen Abschnitt 534 an der Außenfläche 14 des ersten Spiegelelements 10 auf, welcher über die Außenfläche 14 des Spiegelelements 10 hinausragt und in lateraler Richtung das erste und das zweite Spiegelelement 10, 20 überlappt. Auf diese Weise kann die mechanische Anbindung der mindestens einen Stützstruktur 530 an das erste und das zweite Spiegelelement 10, 20 weiter verbessert werden. Des Weiteren kann auch die mindestens eine Stützstruktur 530 einen Abschnitt 532 aufweisen, welcher aus der Außenfläche 24 des zweiten Spiegelelements 20 herausragt.

Des Weiteren kann die Stützstruktur 530 derart ausgebildet sein, dass sie sowohl das erste Spiegelelement 10 als auch das zweite Spiegelelement 20 lateral bzw. transversal überlappt, um eine bessere mechanische Anbindung zu gewährleisten.

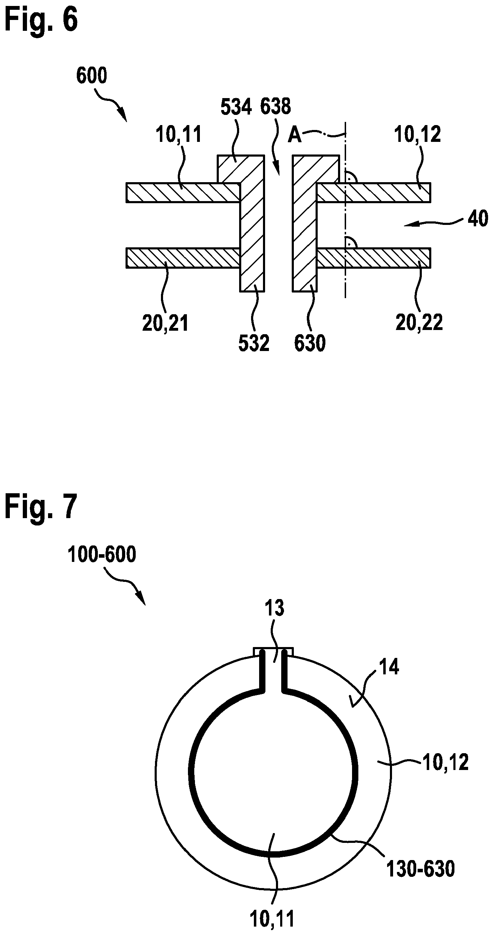

Fig. 6 zeigt eine schematische Querschnittsansicht einer mikromechanischen Spiegelvorrichtung 600 gemäß noch einer weiteren Ausführungsform. Die Spiegelvorrichtung 600 ist eine Variante der Spiegelvorrichtung 500 und unterscheidet sich von dieser darin, dass eine Stützstruktur 630 an die Stelle der Stützstruktur 530 der Spiegelvorrichtung 500 tritt. Die mindestens eine Stützstruktur 630 ist ebenso ausgebildet wie die mindestens eine Stützstruktur 530 der Spiegelvorrichtung 500, bis auf den Unterschied, dass die mindestens eine Stützstruktur 630 keine Blindbohrung 538 aufweist, sondern statt deren einen Fluiddurchgangskanal 638, welcher die Stützstruktur 630 vollständig durchquert.

Die mindestens eine Stützstruktur 630 kann derart ausgebildet sein, dass sie mindestens einen lokal begrenzten Fluiddurchgangskanal 638 aufweist. Alternativ kann die mindestens eine Stützstruktur 630 auch derart ausgebildet sein, dass sich der Fluiddurchgangskanal 638 entlang der gesamten Stützstruktur 630 erstreckt.

Verschiedene Elemente der im Voranstehenden beschriebenen Spiegelvorrichtungen 100-600 können selbstverständlich miteinander kombiniert werden. Beispielsweise können auch die Spiegelvorrichtungen 100, 200, 300 und 400 einen von der Außenfläche 14 des ersten Spiegelelements 10 abstehenden Abschnitt 534 aufweisen, um eine bessere mechanische Anbindung zu ermöglichen. Des Weiteren können auch die Stützstrukturen 130, 230, 330, 430 der Spiegelvorrichtungen 100 bis 400 eine Blindbohrung 538 oder einen Fluiddurchgangskanal 638 aufweisen, wie in den Figuren 5 und 6 gezeigt und in den entsprechenden Textpassagen beschrieben wurde.

Außerdem können auch die Stützstrukturen 130, 230, 330, 530 und 630 aus mehr als zwei Materialien ausgebildet sein, wie dies in Fig. 4 dargestellt ist und wie dies mit Bezug auf Fig. 4 im Voranstehenden erläutert wurde.

Es versteht sich, dass auch ein laterales Überlappen der Stützstrukturen 130, 230, 430, 530, 630 mit dem ersten und/oder dem zweiten Spiegelelement 10, 20, insbesondere im Bereich des Zwischenraums 40, vorgesehen werden kann, wie in Fig. 3 gezeigt ist und wie im Voranstehenden mit Bezug auf Fig. 3 beschrieben wurde.

Fig. 7 zeigt eine schematische Draufsicht auf einen Ausschnitt aus einer möglichen vorteilhaften Ausführung der mikromechanischen Spiegelvorrichtung 100-600 auf die Außenfläche 14 des ersten Spiegelelements 10. In Fig. 7 ist verdeutlicht, dass der erste Teilabschnitt 11 des ersten Spiegelelements 10, die Stützstruktur 130 bis 630 und der zweite Teilabschnitt 12 des ersten Spiegelelements 10 (und entsprechend die Teilabschnitte 21, 22 des zweiten Spiegelelements 20, welches in Fig. 7 nicht sichtbar ist) derart ausgebildet sind, dass der erste Teilabschnitt 11 in lateralen Richtungen fast vollständig von dem zweiten Teilabschnitt 12 umgeben ist, wobei ein Steg 13 des ersten Spiegelelements 10 elektrisch mit dem ersten Teilabschnitt 11 verbunden und elektrisch von dem zweiten Teilabschnitt 12 isoliert ist, so dass sowohl der erste Teilabschnitt 11 als auch der zweite Teilabschnitt 12 vorteilhaft an einem Rand der Spiegelvorrichtung 100-600 elektrisch kontaktiert werden können.

Bevorzugt weist die mindestens eine Stützstruktur 130 bis 630 in dem ersten Spiegelelement 10 in der Draufsicht im Wesentlichen (insbesondere bis auf den Steg 13) eine Kreisform auf, so dass auch der erste Teilabschnitt 11 innerhalb des zweiten Teilabschnitts 12 im Wesentlichen kreisförmig ausgebildet ist. Auf diese Weise kann im Bereich des ersten Teilabschnitts 11 ein besonders homogenes elektrisches Feld vorliegen oder ausgebildet werden, wodurch unerwünschte elektrische Effekte, beispielsweise beim Aktuieren und/oder Detektieren verringert oder vermieden werden können.

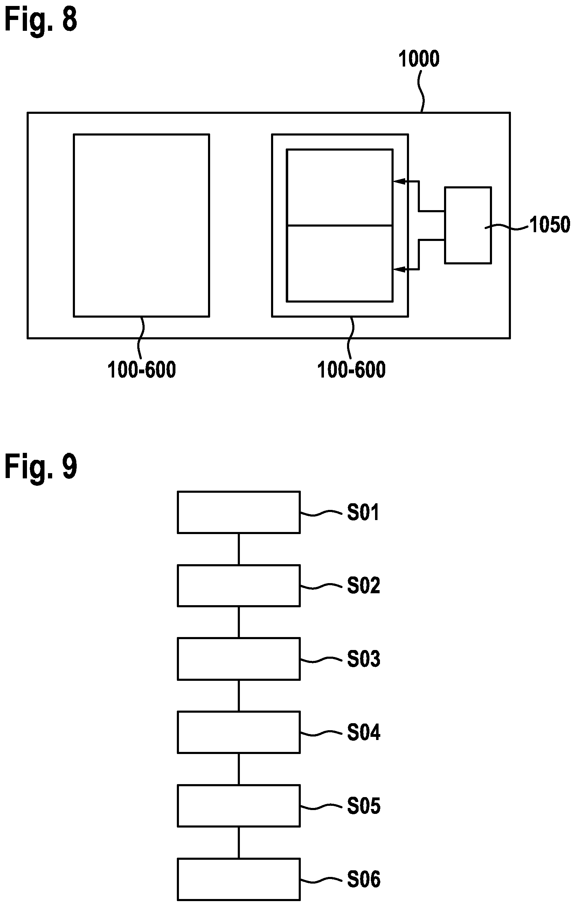

Weist ein Spiegelsystem (siehe auch Fig.8) beispielsweise zwei der erfindungsgemäßen Spiegelvorrichtungen 100-600 auf, können aufgrund der ringförmigen Elektroden, wie in Fig. 7 gezeigt, die beiden Spiegelvorrichtungen bidirektional aktuiert und aufeinander zu bewegt werden. Im Falle von flächigen Elektroden würde nämlich andernfalls eine Anziehungskraft zwischen den beiden Spiegelvorrichtungen wirken, welche sich wie eine flächige Druckbelastung verhält und somit zum Durchhang der Spiegelvorrichtungen und zu einer Herabsetzung der Parallelität führen könnte. Dies könnte eine spektrale Durchlassbreite der Spiegelvorrichtung erhöhen und somit die Auflösung eines durch die zwei Spiegelvorrichtungen 100-600 gebildeten Interferometers verringern.

Etwas Ähnliches gilt auch für eine kapazitive Detektion, falls zwischen zwei Spiegelvorrichtungen eines Interferometers eine Spannung angelegt wird. In diesem Fall kommt es nämlich bei flächigen Elektroden zu einer Anziehung und wie zuvor beschrieben zum Herabsetzen der Parallelität der Interferometerspiegel im optisch relevanten Bereich, welcher in Fig. 7 dem ersten Teilabschnitt 11 entspricht. Die hierin beschriebenen Ausführungsformen erlauben somit eine kapazitive Detektion, insbesondere eine direkte Messung eines optischen Spalts zwischen zwei Spiegelvorrichtungen eines Interferometers, ohne dabei zu Herabsetzungen der Spiegelparallelität zwischen den Spiegelvorrichtungen des Interferometers zu führen.

Selbstverständlich ist auch eine weitere Segmentierung denkbar, beispielsweise eine Segmentierung in mehr als zwei zueinander im Wesentlichen zueinander konzentrische Teilabschnitte 11, 12. Dies kann beispielsweise dazu verwendet werden, in dem optisch relevanten innersten Teilabschnitt 11 einen vollständig oder weitgehend feldfreien Raum zu erzeugen. Dies kann beispielsweise dadurch erreicht werden, dass in einem mittleren Teilabschnitt 12, welcher den innersten Teilabschnitt 11 weitgehend umschließt, wie in Fig. 7 gezeigt, ein erstes elektrisches Potential angelegt wird und an einem dritten Teilabschnitt, welcher sowohl den ersten Teilabschnitt 11 als auch den zweiten Teilabschnitt 12 im Wesentlichen kreisförmig umschließt (in Fig. 7 nicht dargestellt), ein zweites elektrisches Potential angelegt wird, welches im Vergleich zu dem ersten elektrischen Potential ein umgekehrtes Vorzeichen aufweist.

Es kann vorgesehen sein, dass die erfindungsgemäße Spiegelvorrichtung 100-600 zusätzlich oder alternativ zu der mindestens einen elektrisch isolierenden Stützstruktur 130-630 auch mindestens eine weitere Stützstruktur aufweist, welche keine elektrische Isolierung von Teilabschnitten von Spiegelelementen 10, 20 vornimmt. Dies kann beispielsweise dadurch bewerkstelligt werden, dass diese zusätzlichen Stützstrukturen keine Teilabschnitte vollständig voneinander trennen und/oder dadurch, dass die Stützstrukturen selbst elektrisch leitfähig oder als Halbleiter ausgebildet sind, insbesondere aus demselben Material ausgebildet sind wie das erste und/oder das zweite Spiegelelement 10, 20.

Diese weiteren Stützstrukturen, welche keine elektrische Isolierung von Teilabschnitten vornehmen, können auch als Hilfs-Stützstrukturen bezeichnet werden. Die Hilfs-Stützstrukturen können beispielsweise in Form von regelmäßigen oder unregelmäßigen Gittern angeordnet werden. Beispielsweise kann eine Hilfs-Stützstruktur in Form eines hexagonalen Wabenmusters ausgebildet sein, welches sich bevorzugt vollständig über einen der Teilabschnitte der Spiegelelemente 10, 20 erstreckt. Beispielsweise kann bei der in Fig. 7 gezeigten Ausführungsform eine erste solche Hilfs-Stützstruktur flächendeckend an dem ersten Teilabschnitt 11 angeordnet sein, und/oder eine zweite Hilfs-Stützstruktur kann flächendeckend an dem zweiten Teilabschnitt 12 des ersten Spiegelelements 10 und dem zweiten Teilabschnitt 22 des zweiten Spiegelelements20 angeordnet sein.

Ein großer Vorteil der hierin beschriebenen Stützstrukturen und Hilfs-Stützstrukturen ist die mechanische Steifigkeit gegenüber einer zugspannungsinduzierten Deformation. Bisher bekannte stützende Strukturen ("Ankerstrukturen") haben oft den intrinsischen Nachteil, dass eine tensile Vorspannung der Spiegelvorrichtungen dazu führt, dass sich die Ankerstrukturen verformen, um die Vorspannung teilweise abzubauen. Diese Deformation führt in einem Bereich um eine jeweilige Ankerstruktur dazu, dass die Beabstandung der Teilschichten (entsprechend den Spiegelelementen) nicht mehr der der Wellenlänge entspricht, auf welche der Bragg-Spiegel eingestellt ist, wodurch sich die optischen Eigenschaften des Bragg-Spiegels, das heißt der Spiegelvorrichtung, verschlechtern. Demgegenüber haben die hierin beschriebenen Stützstrukturen und Hilfs-Stützstrukturen den deutlichen Vorteil, eine größere Steifigkeit gegenüber solchen Deformationen zu haben, wodurch ein Verlust von optischer Fläche durch falsch beabstandete Spiegelelemente 10, 20 minimiert wird.

Die Hilfs-Stützstrukturen können als, zumindest teilweise oder vollständig durchgehende Wandstrukturen realisiert sein und/oder als voneinander separate und beabstandete Säulenstrukturen realisiert sein. Hexagonale Gitteranordnungen bieten eine besonders hohe mechanische Stabilität. Die Stützstrukturen und/oder die Hilfs-Stützstrukturen können als verfüllte oder als hohle/eingefaltete Strukturen ausgeführt sein. Die Stützstrukturen und/oder die Hilfs-Stützstrukturen können auch derart ausgebildet sein, dass ein Schichtstress einer Membran angepasst wird.

Fig. 8 zeigt ein schematisches Blockdiagramm zum Erläutern eines Spiegelsystems 1000 gemäß einer weiteren Ausführungsform. Das Spiegelsystem 1000 kann beispielsweise ein Interferometer, insbesondere ein Fabry-Perot-Interferometer sein. Das Spiegelsystem 1000 ist ausgebildet mit mindestens zwei dielektrischen bzw. halbleitenden Spiegelvorrichtungen, von denen mindestens eine erfindungsgemäße Spiegelvorrichtung 100-600 ist.

Mindestens eine der Spiegelvorrichtungen, insbesondere eine erfindungsgemäße Spiegelvorrichtung 100-600, ist relativ zu der mindestens einen anderen Spiegelvorrichtung beweglich.

Fig. 8 impliziert keine geometrische Anordnung der Spiegelvorrichtungen. Die Spiegelvorrichtungen sind bevorzugt an, oder auf, einem gemeinsamen Substrat angeordnet und im Wesentlichen (oder vollständig) parallel zueinander ausgerichtet, um ein Fabry-Perot-Interferometer zu bilden, wie dies im Stand der Technik bereits bekannt ist.

Durch Verändern eines Abstandes zwischen den beiden Spiegelvorrichtungen (insbesondere durch Bewegen der beweglichen Spiegelvorrichtung) kann das Spiegelsystem 1000 beispielsweise als durchstimmbarer spektraler Filter betrieben werden. Zum Verändern des Abstandes zwischen den Spiegelvorrichtungen kann an die mindestens eine erfindungsgemäße Spiegelvorrichtung 100-600 mittels einer Kontaktierungsvorrichtung 1050 des Spiegelsystems 1000 ein erstes elektrisches Potential an einen ersten Teilabschnitt 11 dieser Spiegelvorrichtung 100-600 angelegt werden und ein zweites elektrisches Potential an einen zweiten Teilabschnitt dieser Spiegelvorrichtung 100-600 angelegt werden, beispielsweise wie im Voranstehenden in Bezug auf Fig. 7 näher beschrieben.

Die Kontaktierungsvorrichtung 1050 kann auch dazu ausgebildet sein, an die mindestens eine weitere Spiegelvorrichtung des Spiegelsystems 1000 mindestens ein elektrisches Potential anzulegen. Bevorzugt sind alle Spiegelvorrichtungen in dem Spiegelsystem 1000 erfindungsgemäße Spiegelvorrichtungen 100-600 und die Kontaktierungsvorrichtung 1050 ist dazu ausgelegt, an die verschiedenen Teilabschnitte 11, 12, 21, 22 der mindestens zwei Spiegelvorrichtungen 100-600 des Spiegelsystems 1000 verschiedene elektrische Potentiale anzulegen.

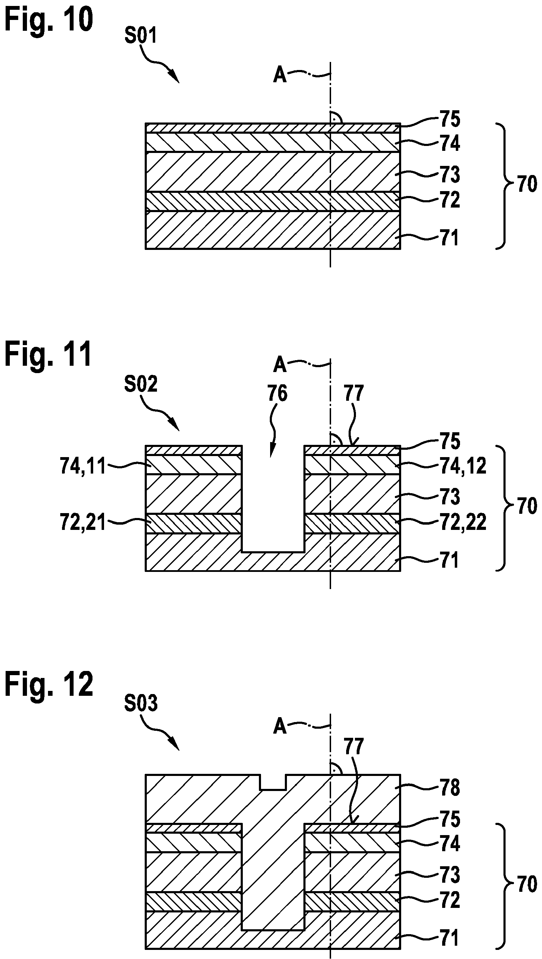

Fig. 9 zeigt ein schematisches Flussdiagramm zum Erläutern eines Verfahrens zum Herstellen einer mikromechanischen Spiegelvorrichtung, insbesondere einer erfindungsgemäßen mikromechanischen Spiegelvorrichtung 100-600. Das Verfahren gemäß Fig. 9 wird im Folgenden anhand der Figuren 10 bis 15 und mit Verweis auf Bezugszeichen in diesen Figuren näher erläutert. Das Verfahren gemäß Fig. 9 ist gemäß allen in Bezug auf die erfindungsgemäße Spiegelvorrichtung 100-600 beschriebenen Varianten und Weiterbildungen anpassbar und umgekehrt.

Figuren 10 bis 15 zeigen schematische Detailansichten im Querschnitt durch Zwischenprodukte des erfindungsgemäßen Verfahrens zum Herstellen der mikromechanischen Spiegelvorrichtung.

In einem Schritt S01 wird ein Schichtstapel 70 bereitgestellt, welcher aufweist: eine dielektrische Schicht 71, eine an der dielektrischen Schicht 71 angeordnete erste lichtbrechende Schicht 72, eine an der ersten lichtbrechenden Schicht 72 angeordnete Opferschicht 73, eine an der Opferschicht 73 angeordnete zweite lichtbrechende Schicht 74. Optional kann der Schichtstapel 70a auch mit einer an der zweiten lichtbrechenden Schicht 74 angeordneten Schutzschicht 75 bereitgestellt werden. Die dielektrische Schicht 71 kann je nach Ausführung ebenfalls als Opferschicht dienen.

Mit anderen Worten umfasst der Schichtstapel 70 in der folgenden Reihenfolge aneinander angeordnet die erste dielektrische Schicht 71, die erste lichtbrechende Schicht 72, die Opferschicht 73, die zweite lichtbrechende Schicht 74 und, optional, die Schutzschicht 75. Die lichtbrechenden Schichten 72, 74 sind insbesondere hochbrechende Schichten, d.h. Schichten mit einem höheren Brechungsindex als Luft.

Die dielektrische Schicht 71 und/oder die Opferschicht 73 sind Schichten, welche im späteren Verlauf des Verfahrens einfach entfernbar sind und können beispielsweise aus Siliziumdioxid, SiO₂, bestehen. Die erste und/oder die zweite lichtbrechende Schicht 72, 74, aus welchen im Folgenden die Spiegelelemente gefertigt werden, bestehen beispielsweise aus einem Material wie Silizium, insbesondere Polysilizium, wobei auch andere Materialien wie zum Beispiel Germanium oder Siliziumcarbid denkbar sind, welche mit dem Opferschicht-Ätzprozess kompatibel sind, in welchem später die Opferschicht 73 und ggfs. auch die dielektrische Schicht 71 entfernt werden.

Die optionale Schutzschicht 75 kann bei der weiteren Prozessierung vorteilhaft sein und beispielsweise aus Siliziumdioxid (SiO2) bestehen.

Fig. 10 zeigt ein Zwischenprodukt des Verfahrens nach dem Durchführen des Verfahrensschritts S01.

Im Folgenden wird anhand der Figuren 11 bis 15 erläutert werden, wie eine einzelne Stützstruktur 130-630 (stets in Querschnittsdarstellung) hergestellt werden kann, wobei verstanden werden soll, dass, in Draufsicht, die mindestens eine Stützstruktur 130-630 beispielsweise ausgebildet sein kann wie in Fig. 7 gezeigt und/oder wie mit Bezug auf Fig. 7 näher erläutert wurde. Weiterhin versteht es sich, dass in derselben Weise eine Vielzahl von Stützstrukturen 130-630, beispielsweise zum gleichzeitigen Ausbilden einer Vielzahl von voneinander elektrisch isolierten Teilabschnitten 11, 12, 21, 22, gleichzeitig ausgebildet werden kann.

In einem Schritt S02 wird jeweils ein Teil der ersten lichtbrechenden Schicht 72, der Opferschicht 73 und der zweiten lichtbrechenden Schicht 74 entfernt, so dass eine zusammenhängende Ausnehmung 76 derart entsteht, dass die Ausnehmung 76 die erste und die zweite lichtbrechende Schicht 72, 74 jeweils in je mindestens zwei voneinander beabstandete Teilabschnitte 11, 12, 21, 22 unterteilt.

Das Entfernen der Schichten 72-74 wird derart durchgeführt, dass die Ausnehmung 76 die erste und die zweite lichtbrechende Schicht 72, 74 in einer axialen Richtung A, welche senkrecht zu der ersten und der zweiten lichtbrechenden Schicht 72, 74 angeordnet ist, überlappt, ebenso wie dies in zu Fig. 1 mit Bezug auf die Stützstruktur 130 erläutert wurde.

Das Ausbilden der Ausnehmung 76 kann beispielsweise durch Lithographie und/oder Ätzen erfolgen. Die Ausnehmung kann insbesondere, in der Draufsicht, als ein rundes Loch oder als ein Graben ausgebildet sein.

Die dielektrische Schicht 71 und die Opferschicht 73, und optional auch die optionale Schutzschicht 75, können isotrop oder teilweise isotrop geätzt werden, um nach einer konformen Abscheidung einer Füllschicht zum Ausbilden der späteren Stützstruktur eine bessere mechanische Anbindung der späteren Stützstruktur an die erste und die zweite lichtbrechende Schicht 72, 74 (spätere Spiegelelemente) durch eine größere Kontaktfläche zu ermöglichen. Ein mögliches Endergebnis ist beispielsweise in Fig. 3 dargestellt und wurde mit Bezug auf Fig. 3 näher erläutert.

Optional kann nach, oder bei, dem grundsätzlichen Ausbilden S02 der Ausnehmung 76, z.B. in einem weiteren Verfahrensschritt, die dielektrische Schicht 71 von der Ausnehmung 76 aus geätzt werden, so dass die spätere Stützstruktur mit Anschlägen ausgebildet ist, beispielsweise einem Anschlag 232 wie in Fig. 2 gezeigt und mit Bezug auf Fig. 2 beschrieben.

Wurde in dem Schritt S01 ein Schichtstapel 70 mit einer Schutzschicht 75 bereitgestellt, wird entsprechend die zu sammelnde Ausnehmung auch durch die Schutzschicht 75 hindurch ausgebildet. Ein Zwischenprodukt des Verfahrens nach dem Durchführen des Schritts S02 ist in Fig. 11 dargestellt. Dabei ist ersichtlich, dass die Ausnehmung 76 im Querschnitt als eine Blindbohrung dargestellt ist.

Zum elektrischen Trennen von voneinander beabstandeten Teilabschnitten 11, 12, 21, 22 der Spiegelelemente 10, 20 kann die Ausnehmung 76, welche die Form der späteren Stützstruktur teilweise vorgibt, als eine langgestreckte Struktur ausgebildet werden, beispielsweise als ein langgezogener Kanal.

Bevorzugt wird die Ausnehmung 76 in der Draufsicht derart geformt werden, wie dies in Bezug auf Fig. 7 bezüglich der mindestens einen Stützstruktur 130 bis 630 zwischen dem ersten Teilabschnitt 11 und dem zweiten Teilabschnitt 12 beschrieben wurde. Alternativ kann die Ausnehmung 76, oder eine Mehrzahl von Ausnehmungen 76, auch säulenartig oder in beliebiger anderer Form ausgebildet werden.

In einem Schritt S03 wird auf eine Seite des Schichtstapels 70, zu welcher Hinsicht die Ausnehmung 76 öffnet, und welche in Fig. 11 mit 77 bezeichnet ist, eine Füllschicht 78 abgegeben, beispielsweise mittels eines Gasphasenabscheidungsprozesses oder anderer bekannter Prozesse zum Abscheiden von Schichten auf Substraten. Aufgrund der vorhandenen Ausnehmung 76 wird sich die Füllschicht 78 nicht lediglich flach auf dem Schichtstapel 70 anordnen, sondern die Ausnehmung 76 ganz oder teilweise ausfüllen, wie in Fig. 12 gezeigt. Fig. 12 stellt ein Zwischenprodukt des erfindungsgemäßen Verfahrens nach dem Verfahrensschritt S03 schematisch dar. Die Füllschicht 78 besteht aus einem Material, oder weist ein Material auf, welches sich von dem Material (oder den Materialien) der lichtbrechenden Schichten 72, 74 unterscheidet.

Im Voranstehenden wurde ausführlich erläutert, dass es vorteilhaft ist, wenn die mindestens eine Stützstruktur verschiedene Teilabschnitte 11, 12, 21, 22 der Spiegelelemente voneinander elektrisch isoliert. Dafür kann die Füllschicht 78 als elektrisch isolierende Schicht 78 ausgebildet sein, d.h. aus einem elektrisch isolierenden Material oder Materialgemisch bestehen.

Bei dem Abscheiden S03 der Füllschicht 78 wird eine möglichst konforme Abscheidung bevorzugt. Die abgeschiedene Schichtdicke der Füllschicht beträgt bevorzugt mindestens die halbe Breite der Ausnehmung 76, um möglichst wenig Topographie zu erzeugen, das heißt eine möglichst homogene Füllung der Ausnehmung 76 zu bewirken. Die Füllschicht 78 besteht vorteilhaft aus einem Silizium- oder einem Aluminium-basierten Isolator, beispielsweise Siliziumnitrid, Siliziumcarbid, Siliziumcarbonitrid oder Aluminiumoxid.

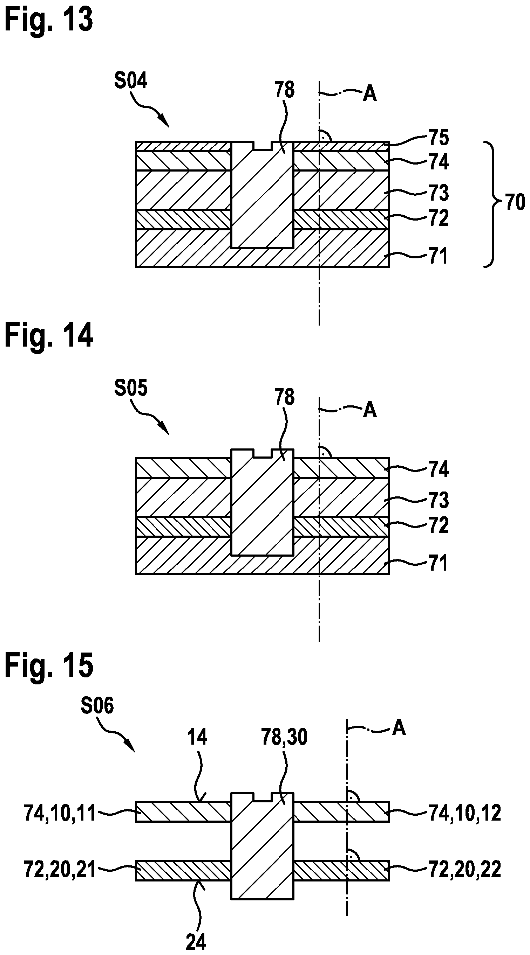

In einem Schritt S04 wird zumindest derjenige Teil der zusätzlichen Schicht 78, welcher außerhalb einer ursprünglichen Außenfläche des Schichtstapels liegt, entfernt. Insbesondere kann ganzflächig Material entfernt werden. Wurde in dem Schritt S01 ein Schichtstapel 70 mit der optionalen Schutzschicht 75 bereitgestellt, so wird derjenige Teil der Füllschicht 78 entfernt, welcher über die Schutzschicht 75 hinausragt, wie in Fig. 13 dargestellt.

Das Entfernen S04 des überstehenden Teils der Füllschicht 78 erfolgt bevorzugt durch Ätzen und/oder Polieren. Die Schutzschicht 75, sofern sie ausgebildet wurde, kann dabei als Ätzstopp oder Polierstopp fungieren. Auf das Ausbilden der Schutzschicht 75 kann insbesondere dann verzichtet werden, wenn die gewählten Prozesse eine ausreichende Selektivität aufweisen, das heißt hinreichend gut auf die Füllschicht 78 wirken und gleichzeitig die zweite lichtbrechende Schicht 74 nicht, oder nur in geringem Maße, angreifen.

Fig. 13 zeigt eine schematische Detailansicht in Querschnittsdarstellung eines Zwischenprodukts des erfindungsgemäßen Verfahrens zum Herstellen der mikromechanischen Spiegelvorrichtung nach Durchführen des Schritts S04.

Wurde keine optionale Schutzschicht 75 bereitgestellt, und wurde die ursprüngliche Außenfläche des Schichtstapels 70 etwa durch die zweite lichtbrechende Schicht 74 bereitgestellt, so wird dementsprechend derjenige Teil der Füllschicht 78 entfernt, welcher außerhalb dieser ursprünglichen Außenfläche, das heißt der zweiten lichtbrechenden Schicht 74 liegt, das heißt aus dieser herausragt.

In einem optionalen Schritt S05 wird die Schutzschicht 75 nach dem Verfahrensschritt S04 entfernt.

Fig. 13 zeigt in schematischer Querschnittsdarstellung ein Zwischenprodukt des Verfahrens zum Herstellen der mikromechanischen Spiegelvorrichtung nach dem Durchführen des optionalen Schritts S05.

In einem Schritt S06 werden schließlich, beispielsweise über hier nicht gezeigte Opferschicht-Ätzzugänge durch einen Opferschicht-Ätzprozess, die dielektrische Schicht und/oder die Opferschicht 73 entfernt. Somit werden die lichtbrechenden Schichten 72, 74 als Spiegelelemente 10, 20 mit voneinander beabstandeten (und optional elektrisch voneinander isolierten) Teilabschnitten 11, 12, 21, 22 bereitgestellt. In einigen Ausführungsformen können die lichtbrechenden Schichten 72, 74 als Spiegelelemente 10, 20 mit voneinander beabstandeten (und optional elektrisch voneinander isolierten) Teilabschnitten 11, 12, 21, 22 freigestellt werden.

Die übrig gebliebene Füllschicht 78 fungiert somit als Stützstruktur 30, wie in Fig. 15 dargestellt.

Zum Herstellen der Spiegelvorrichtung 100 gemäß Fig. 1 können beispielsweise über die jeweiligen Außenflächen 14, 24 der ersten und zweiten Spiegelelemente 10, 20 hinausragenden Abschnitte der Füllschicht 78 entfernt werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Mikromechanische Spiegelvorrichtung (200-600), mit:
einem ersten Spiegelelement (10), welches plan ausgebildet ist; und
einem zweiten Spiegelelement (20), welches plan ausgebildet ist;
wobei das erste und das zweite Spiegelelement (10, 20) im Wesentlichen planparallel angeordnet sind;
wobei ein Zwischenraum (40) zwischen dem ersten und dem zweiten Spiegelelement (10, 20) einen geringeren Brechungsindex aufweist als das erste und/oder das zweite Spiegelelement (10, 20);
wobei das erste und das zweite Spiegelelement (10, 20) lokal voneinander durch mindestens eine Stützstruktur (230-630) beabstandet angeordnet sind;
wobei die mindestens eine Stützstruktur (230-630) in einer axialen Richtung (A), welche senkrecht zu dem ersten und dem zweiten Spiegelelement (10, 20) angeordnet ist, das erste und das zweite Spiegelelement (10, 20) überlappt; und
wobei die mindestens eine Stützstruktur (230-630) ein Material aufweist, oder aus einem Material ausgebildet ist, welches sich von einem Material unterscheidet, aus welchem das erste und/oder das zweite Spiegelelement (10, 20) ausgebildet ist;
**dadurch gekennzeichnet, dass**
die mindestens eine Stützstruktur (230-630) mindestens einen Abschnitt (232; 332; 432; 532) aufweist, welcher aus einer Außenfläche (14, 24) des ersten Spiegelelements (10) und/oder des zweiten Spiegelelements (20) hervorsteht, wobei die Außenfläche (14, 24) des ersten Spiegelelements (10) und/oder des zweiten Spiegelelements (20) jeweils von dem Zwischenraum (40) zwischen dem ersten Spiegelelement (10) und dem zweiten Spiegelelement (20) abgewandt ist, und wobei zumindest der jeweils als ein Anschlag oder als eine Anti-Haftreibung-Erhebung fungierende mindestens eine Abschnitt (232; 332; 432; 532) der mindestens einen Stützstruktur (230-630) aus einem elektrisch isolierenden Material ausgebildet ist.

2. Spiegelvorrichtung (200-600) nach Anspruch 1,
wobei das Material der mindestens einen Stützstruktur (230-630) eine andere Dicke und/oder mechanische Verspannung aufweist als ein Material des ersten Spiegelelements (10) und/oder des zweiten Spiegelelements (20).

3. Spiegelvorrichtung (200-600) nach einem der Ansprüche 1 oder 2,
wobei die mindestens eine Stützstruktur (230-630) das erste Spiegelelement (10) und das zweite Spiegelelement (20) in je mindestens zwei Teilabschnitte (11, 12, 21, 22) unterteilt, welche durch die mindestens eine Stützstruktur (230-630) voneinander elektrisch isoliert sind.

4. Spiegelvorrichtung (300; 500; 600) nach einem der Ansprüche 1 bis 3,
wobei eine laterale Ausdehnung der mindestens einen Stützstruktur (330; 530; 630) mit einer lateralen Ausdehnung des ersten und/oder des zweiten Spiegelelements (10, 20) überlappt.

5. Spiegelvorrichtung (400) nach einem der Ansprüche 1 bis 4,
wobei die mindestens eine Stützstruktur (430) aus mindestens zwei verschiedenen Materialien (434, 436) ausgebildet ist.

6. Spiegelvorrichtung (600) nach einem der Ansprüche 1 bis 5,
wobei die mindestens eine Stützstruktur (630) eine Fluiddurchgangsöffnung (638) aufweist, durch welche hindurch ein Fluid die Stützstruktur (630), das erste Spiegelelement (10) und das zweite Spiegelelement (20) durchqueren kann.

7. Spiegelvorrichtung (100-600) nach einem der Ansprüche 1 bis 6,
wobei in dem Zwischenraum (40) zwischen dem ersten und dem zweiten Spiegelelement (10, 20) ein Gas oder ein Vakuum angeordnet ist.

8. Spiegelsystem (1000) mit:
einer Spiegelvorrichtung (200-600) nach einem der Ansprüche 1 bis 7; und
einer Kontaktierungsvorrichtung (1050), welche dazu ausgelegt ist, an zumindest zwei voneinander elektrisch isolierte Teilabschnitte (11, 12, 21, 22) des ersten Spiegelelements (10) und/oder des zweiten Spiegelelements (20) unterschiedliche elektrische Potentiale anzulegen.

9. Verfahren zum Herstellen einer mikromechanischen Spiegelvorrichtung (200-600) mit den Merkmalen des Anspruchs 1, mit den Schritten:
Bereitstellen (S01) eines Schichtstapels (70) mit:
einer dielektrischen Schicht (71);
einer an der dielektrischen Schicht (71) angeordneten ersten lichtbrechenden Schicht (72);
einer an der ersten lichtbrechenden Schicht (72) angeordneten Opferschicht (73); und
einer an der Opferschicht (73) angeordneten zweiten lichtbrechenden Schicht (74);
Entfernen (S02) jeweils eines Teils der ersten lichtbrechenden Schicht (72), der Opferschicht (73) und der zweiten lichtbrechenden Schicht (74), sodass eine zusammenhängende Ausnehmung (76) in dem Schichtstapel (70) derart entsteht, dass die Ausnehmung (76) die erste und die zweite lichtbrechende Schicht (72, 74) in einer axialen Richtung (A), welche senkrecht zu der ersten und der zweiten lichtbrechenden Schicht (72, 74) angeordnet ist, überlappt;
wobei die Füllschicht (78) aus einem Material besteht, welches sich von dem Material der ersten und/oder der zweiten lichtbrechenden Schicht (72, 74) unterscheidet;
Abscheiden (S03) einer Füllschicht (78) auf eine Seite des Schichtstapels (70), zu welcher sich die Ausnehmung (76) öffnet;
Entfernen (S04) eines Teils der Füllschicht (78), welcher außerhalb einer ursprünglichen Außenschicht des Schichtstapels (70) liegt; und
Entfernen (S06) der Opferschicht (73) zum Bereitstellen der ersten und der zweiten lichtbrechenden Schicht (72, 74) der mikromechanischen Spiegelvorrichtung (200-600) als zueinander planparallele Spiegelelemente (10, 20);
**gekennzeichnet durch** den Schritt, dass
die mindestens eine Stützstruktur (230-630) der mikromechanischen Spiegelvorrichtung (200-600) mit mindestens einem Abschnitt (232; 332; 432; 532) gebildet wird, welcher aus einer Außenfläche (14, 24) des ersten Spiegelelements (10) und/oder des zweiten Spiegelelements (20) hervorsteht, wobei die Außenfläche (14, 24) des ersten Spiegelelements (10) und/oder des zweiten Spiegelelements (20) jeweils von dem Zwischenraum (40) zwischen dem ersten Spiegelelement (10) und dem zweiten Spiegelelement (20) abgewandt ist, und wobei zumindest der jeweils als ein Anschlag oder als eine Anti-Haftreibung-Erhebung fungierende mindestens eine Abschnitt (232; 332; 432; 532) der mindestens einen Stützstruktur (230-630) aus einem elektrisch isolierenden Material ausgebildet wird.

10. Verfahren nach Anspruch 9,
wobei das Entfernen (S02) derart erfolgt, dass die zusammenhängende Ausnehmung (76) derart entsteht, dass die Ausnehmung (76) die erste und die zweite lichtbrechende Schicht (72, 74) in je mindestens zwei voneinander beabstandete Teilabschnitte (11, 12, 21, 22) unterteilt.

11. Verfahren nach Anspruch 9 oder 10,
wobei der Schichtstapel (70) mit einer an der zweiten lichtbrechenden Schicht (74) angeordneten Schutzschicht (75) bereitgestellt wird, welche die ursprüngliche Außenschicht des Schichtstapels (70) an einer Seite des Schichtstapels (70) bildet;
wobei auch ein Teil der Schutzschicht (75) zum Ausbilden der Ausnehmung (76) entfernt wird;
wobei die Schutzschicht (75) bei dem Entfernen (S04) des Teils der Füllschicht (78) als Ätzstopp und/oder als Polierstopp fungiert; und
wobei das Verfahren den Schritt aufweist:
Entfernen (S05) der Schutzschicht (75) nach dem Entfernen (S04) des Teils der Füllschicht (78).

## Claims

1. Micromechanical mirror device (200-600), comprising:
a first mirror element (10) designed to be planar; and
a second mirror element (20) designed to be planar;
wherein the first and the second mirror element (10, 20) are substantially arranged in a plane-parallel manner;
wherein an intermediate space (40) between the first and the second mirror element (10, 20) has a lower refractive index than the first and/or the second mirror element (10, 20);
wherein the first and the second mirror element (10, 20) are locally arranged to be spaced apart from one another by at least one support structure (230-630);
wherein the at least one support structure (230-630) overlaps the first and the second mirror element (10, 20) in an axial direction (A), which is arranged perpendicular to the first and the second mirror element (10, 20); and
wherein the at least one support structure (230-630) comprises a material, or is formed from a material, which differs from a material from which the first and/or the second mirror element (10, 20) is formed;
**characterized in that**
the at least one support structure (230-630) has at least one portion (232; 332; 432; 532) which protrudes from an outer surface (14, 24) of the first mirror element (10) and/or of the second mirror element (20),
wherein the outer surface (14, 24) of the first mirror element (10) and/or of the second mirror element (20) is in each case remote from the intermediate space (40) between the first mirror element (10) and the second mirror element (20),
and wherein at least the at least one portion (232; 332; 432; 532) of the at least one support structure (230-630) respectively acting as a stop or as an anti-static-friction bump is formed from an electrically insulating material.

2. Mirror device (200-600) according to Claim 1, wherein the material of the at least one support structure (230-630) has a different thickness and/or mechanical stress than a material of the first mirror element (10) and/or of the second mirror element (20).

3. Mirror device (200-600) according to any of Claims 1 and 2,
wherein the at least one support structure (230-630) divides the first mirror element (10) and the second mirror element (20) into at least two partial portions (11, 12, 21, 22) each, which are electrically insulated from one another by the at least one support structure (230-630) .

4. Mirror device (300; 500; 600) according to any of Claims 1 to 3,
wherein a lateral extent of the at least one support structure (330; 530; 630) overlaps with a lateral extent of the first and/or of the second mirror element (10, 20) .

5. Mirror device (400) according to any of Claims 1 to 4,
wherein the at least one support structure (430) is formed from at least two different materials (434, 436).

6. Mirror device (600) according to any of Claims 1 to 5,
wherein the at least one support structure (630) has a fluid through-opening (638), through which a fluid can flow through the support structure (630), the first mirror element (10) and the second mirror element (20).

7. Mirror device (100-600) according to any of Claims 1 to 6,
wherein a gas or a vacuum is disposed in the intermediate space (40) between the first and the second mirror element (10, 20).

8. Mirror system (1000), comprising:
a mirror device (200-600) according to any of Claims 1 to 7; and
a contacting device (1050) designed to apply different electric potentials to at least two partial portions (11, 12, 21, 22), which are electrically insulated from one another, of the first mirror element (10) and/or of the second mirror element (20).

9. Method for producing a micromechanical mirror device (200-600) having the features of Claim 1, comprising the steps of:
providing (S01) a layer stack (70), having:
a dielectric layer (71);
a first light-refracting layer (72) arranged at the dielectric layer (71);
a sacrificial layer (73) arranged at the first light-refracting layer (72); and
a second light-refracting layer (74) arranged at the sacrificial layer (73);
removing (S02) in each case a part of the first light-refracting layer (72), of the sacrificial layer (73) and of the second light-refracting layer (74) to produce a contiguous cutout (76) in the layer stack (70) such that the cutout (76) overlaps the first and the second light-refracting layer (72, 74) in an axial direction (A) arranged perpendicular to the first and the second light-refracting layer (72, 74);
wherein the filling layer (78) consists of a material which differs from the material of the first and/or the second light-refracting layer (72, 74);
depositing (S03) a filling layer (78) on a side of the layer stack (70) to which the cutout (76) opens;
removing (S04) a part of the filling layer (78) which lies outside an original outer layer of the layer stack (70); and
removing (S06) the sacrificial layer (73) for providing the first and the second light-refracting layer (72, 74) of the micromechanical mirror device (200-600) as mirror elements (10, 20) which are plane-parallel with respect to one another;
**characterized by** the step that
the at least one support structure (230-630) of the micromechanical mirror device (200-600) is formed with at least one portion (232; 332; 432; 532) which protrudes from an outer surface (14, 24) of the first mirror element (10) and/or of the second mirror element (20),
wherein the outer surface (14, 24) of the first mirror element (10) and/or of the second mirror element (20) is in each case remote from the intermediate space (40) between the first mirror element (10) and the second mirror element (20),
and wherein at least the at least one portion (232; 332; 432; 532) of the at least one support structure (230-630) respectively acting as a stop or as an anti-static-friction bump is formed from an electrically insulating material.

10. Method according to Claim 9,
wherein the removing (S02) is effected such that the contiguous cutout (76) is produced such that the cutout (76) divides the first and the second light-refracting layer (72, 74) into at least two partial portions (11, 12, 21, 22) each, which are spaced apart from one another.

11. Method according to Claim 9 or 10,
wherein the layer stack (70) is provided with a protective layer (75) which is arranged at the second light-refracting layer (74) and forms the original outer layer of the layer stack (70) on a side of the layer stack (70);
wherein a part of the protective layer (75) is also removed for forming the cutout (76);
wherein the protective layer (75) acts as an etching stop and/or as a polishing stop during the removal (S04) of the part of the filling layer (78); and
wherein the method comprises the step of:
removing (S05) the protective layer (75) after the part of the filling layer (78) has been removed (S04).

## Revendications

1. Dispositif miroir (200-600) micromécanique, comprenant :
un premier élément miroir (10) qui est de configuration plane ; et
un deuxième élément miroir (20) qui est de configuration plane ;
le premier et le deuxième élément miroir (10, 20) étant disposés sensiblement en plans parallèles ;
un espace intermédiaire (40) entre le premier et le deuxième élément miroir (10, 20) présentant un indice de réfraction plus faible que le premier et/ou le deuxième élément miroir (10, 20) ;
le premier et le deuxième élément miroir (10, 20) étant disposés espacés localement l'un de l'autre par au moins une structure de soutien (230-630) ;
l'au moins une structure de soutien (230-630) étant superposée au premier et au deuxième élément miroir (10, 20) dans une direction axiale (A) qui est disposée perpendiculairement au premier et au deuxième élément miroir (10, 20) ; et
l'au moins une structure de soutien (230-630) possédant un matériau ou étant constituée d'un matériau qui se différencie d'un matériau duquel est constitué le premier et/ou le deuxième élément miroir (10, 20) ;
**caractérisé en ce que**
l'au moins une structure de soutien (230-630) possède au moins une portion (232 ; 332 ; 432 ; 532) qui fait saillie d'une surface extérieure (14, 24) du premier élément miroir (10) et/ou du deuxième élément miroir (20), la surface extérieure (14, 24) du premier élément miroir (10) et/ou du deuxième élément miroir (20) étant respectivement orientée à l'opposé de l'espace intermédiaire (40) entre le premier élément miroir (10) et le deuxième élément miroir (20), et au moins l'au moins une portion (232 ; 332 ; 432 ; 532) de l'au moins une structure de soutien (230-630), qui remplit respectivement la fonction d'une butée ou d'un bossage anti-frottement par adhérence, étant constituée d'un matériau électriquement isolant.

2. Dispositif miroir (200-600) selon la revendication 1, le matériau de l'au moins une structure de soutien (230-630) présentant une autre épaisseur et/ou un autre gauchissement mécanique qu'un matériau du premier élément miroir (10) et/ou du deuxième élément miroir (20).

3. Dispositif miroir (200-600) selon l'une des revendications 1 ou 2, l'au moins une structure de soutien (230-630) divisant le premier élément miroir (10) et le deuxième élément miroir (20) en respectivement au moins deux portions partielles (11, 12, 21, 22), lesquelles sont isolées électriquement les unes des autres par l'au moins une structure de soutien (230-630) .

4. Dispositif miroir (300 ; 500 ; 600) selon l'une des revendications 1 à 3, une extension latérale de l'au moins une structure de soutien (330 ; 530 ; 630) étant superposée à une extension latérale du premier et/ou du deuxième élément miroir (10, 20).

5. Dispositif miroir (400) selon l'une des revendications 1 à 4, l'au moins une structure de soutien (430) étant constituée d'au moins deux matériaux (434, 436) différents.

6. Dispositif miroir (600) selon l'une des revendications 1 à 5, l'au moins une structure de soutien (630) possédant une ouverture de passage (638) de fluide à travers laquelle un fluide peut traverser la structure de soutien (630), le premier élément miroir (10) et le deuxième élément miroir (20).

7. Dispositif miroir (100-600) selon l'une des revendications 1 à 6, un gaz ou un vide se trouvant dans l'espace intermédiaire (40) entre le premier et le deuxième élément miroir (10, 20).

8. Système de miroir (1000), comprenant :
un dispositif miroir (200-600) selon l'une des revendications 1 à 7 ; et
un dispositif d'établissement de contact (1050), lequel est conçu pour appliquer des potentiels électriques différents à au moins deux portions partielles (11, 12, 21, 22) isolées électriquement les unes des autres du premier élément miroir (10) et/ou du deuxième élément miroir (20).

9. Procédé de fabrication d'un dispositif miroir (200-600) micromécanique ayant les caractéristiques de la revendication 1, comprenant les étapes suivantes :
fourniture (S01) d'un empilement de couches (70) comprenant :
une couche diélectrique (71) ;
une première couche réfringente (72) disposée au niveau de la couche diélectrique (71) ;
une couche sacrificielle (73) disposée au niveau de la première couche réfringente (72) ; et
une deuxième couche réfringente (74) disposée au niveau de la couche sacrificielle (73) ;
enlèvement (S02) respectivement d'une partie de la première couche réfringente (72), de la couche sacrificielle (73) et de la deuxième couche réfringente (74), de sorte qu'une cavité (76) cohérente se produit dans l'empilement de couches (70) de telle sorte que la cavité (76) est superposée à la première et à la deuxième couche réfringente (72, 74) dans une direction axiale (A) qui est disposée perpendiculairement à la première et à la deuxième couche réfringente (72, 74) ;
la couche de remplissage (78) se composant d'un matériau qui se différencie du matériau de la première et/ou de la deuxième couche réfringente (72, 74) ;
dépôt (S03) d'une couche de remplissage (78) sur un côté de l'empilement de couches (70) vers lequel s'ouvre la cavité (76) ;
enlèvement (S04) d'une partie de la couche de remplissage (78) qui se trouve en dehors d'une couche extérieure originelle de l'empilement de couches (70) ; et
enlèvement (S06) de la couche sacrificielle (73) en vue de fournir la première et la deuxième couche réfringente (72, 74) du dispositif miroir (200-600) micromécanique en tant qu'éléments miroirs (10, 20) disposés en plans parallèles l'un par rapport à l'autre ;
**caractérisé par** l'étape selon laquelle
l'au moins une structure de soutien (230-630) du dispositif miroir (200-600) micromécanique est formée avec au moins une portion (232 ; 332 ; 432 ; 532) qui fait saillie d'une surface extérieure (14, 24) du premier élément miroir (10) et/ou du deuxième élément miroir (20), la surface extérieure (14, 24) du premier élément miroir (10) et/ou du deuxième élément miroir (20) étant respectivement orientée à l'opposé de l'espace intermédiaire (40) entre le premier élément miroir (10) et le deuxième élément miroir (20), et au moins l'au moins une portion (232 ; 332 ; 432 ; 532) de l'au moins une structure de soutien (230-630), qui remplit respectivement la fonction d'une butée ou d'un bossage anti-frottement par adhérence, étant constituée d'un matériau électriquement isolant.

10. Procédé selon la revendication 9,
l'enlèvement (S02) s'effectuant de telle sorte que la cavité (76) cohérente est produite de telle sorte que la cavité (76) divise la première et la deuxième couche réfringente (72, 74) en respectivement au moins deux portions partielles (11, 12, 21, 22) espacées l'une de l'autre.

11. Procédé selon la revendication 9 ou 10,
l'empilement de couches (70) étant fourni avec une couche de protection (75) disposée au niveau de la deuxième couche réfringente (74), laquelle forme la couche extérieure originelle de l'empilement de couches (70) d'un côté de l'empilement de couches (70) ;
une partie de la couche de protection (75) étant également enlevée afin de former la cavité (76) ;
la couche de protection (75) remplissant la fonction d'arrêt de gravure et/ou d'arrêt de polissage lors de l'enlèvement (S04) de la partie de la couche de remplissage (78) ; et
le procédé comprenant l'étape suivante :
enlèvement (S05) de la couche de protection (75) après l'enlèvement (S04) de la partie de la couche de remplissage (78).
